Europäisches Patentamt

European Patent Office

Office européen des brevets

(19)

(11) **EP 0 847 182 A2**

(12) **EUROPÄISCHE PATENTANMELDUNG**

(43) Veröffentlichungstag:
10.06.1998 Patentblatt 1998/24

(51) Int. Cl.⁶: $H04M\ 11/02$

(21) Anmeldenummer: 97118178.9

(22) Anmeldetag: 20.10.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 18.10.1996 DE 19643125

(71) Anmelder:
S. Siedle & Söhne Telefon- und Telegrafenwerke
Stiftung & Co.
78120 Furtwangen (DE)

(72) Erfinder:
• Frensch, Jochen, Dipl.Ing.
78120 Furtwangen (DE)
• Stein, Manfred, Dipl.Ing.
63454 Hanau (DE)
• Glatthaar, Richard, Dipl.Ing.
78727 Oberndorf (DE)

(74) Vertreter:
Patentanwälte
Leinweber & Zimmermann
Rosental 7
80331 München (DE)

(54) **Türsprechsystem und Stromregler, insbesondere für eine Energieversorgungseinrichting darin**

(57) Es wird ein Türsprechsystem mit einer Türsprechanlage, n (n ≥ 1) Haustelefonen und einer eine Energieversorgungseinrichtung und eine Rufeinrichtung zum Rufen einzelner oder einer Gruppe von Haustelefonen enthaltenden Steuerung beschrieben.

Das Türsprechsystem ist gekennzeichnet durch eine erste Leitung, an die alle Haustelefone angeschlossen sind, und m (m ≥ 1) zweite Leitungen, an die jeweils ein einzelnes Haustelefon oder eine Gruppe Haustelefone angeschlossen ist, wobei die Steuerung dazu ausgelegt ist, in einem Ruhezustand eine erste Spannung zwischen der ersten Leitung einerseits und den zweiten Leitungen andererseits anzulegen und bei Betätigen der Rufeinrichtung eine zweite Spannung zwischen der ersten Leitung und derjenigen zweiten Leitung anzulegen, die dem gerufenen Haustelefon bzw. der gerufenen Gruppe Haustelefone zugeordnet ist, um dort ein Rufsignal zu erzeugen.

Figur 1

EP 0 847 182 A2

**Beschreibung**

Die Erfindung betrifft ein Türsprechsystem mit einer Türsprechanlage, n (n ≥ 1) Haustelefonen und einer eine Energieversorgungseinrichtung und eine Rufeinrichtung zum Rufen einzelner oder einer Gruppe von Haustelefonen enthaltenden Steuerung.

Türsprechsysteme der vorstehend beschriebenen Art sind bekannt. Bei bekannten Türsprechsystemen besteht allerdings das Problem, daß eine Vielzahl von Leitungen zwischen den beteiligten Elementen verlegt werden müssen, um alle gewünschten Funktionen ausführen zu können.

Es ist Aufgabe der Erfindung, ein Türsprechsystem der eingangs genannten Art derart weiterzubilden, daß man mit wenig Leitungen auskommt.

Erfindungsgemäß wird die gestellte Aufgabe durch eine erste Leitung, an die alle Haustelefone angeschlossen sind, und m (m ≥ 1) zweite Leitungen gelöst, an die jeweils ein einzelnes Haustelefon oder eine Gruppe Haustelefone angeschlossen ist, wobei die Steuerung dazu ausgelegt ist, in einem Ruhezustand eine erste Spannung zwischen der ersten Leitung einerseits und den zweiten Leitungen andererseits anzulegen und bei Betätigen der Rufeinrichtung eine zweite Spannung zwischen der ersten Leitung und derjenigen zweiten Leitung anzulegen, die dem gerufenen Haustelefon bzw. der gerufenen Gruppe Haustelefone zugeordnet ist, um dort ein Rufsignal zu erzeugen.

Bei der erfindungsgemäßen Lösung kommt man mit (1 + m) Leitungen aus, nämlich der allen Haustelefonen gemeinsamen ersten Leitung und m zweiten Leitungen, so daß gegebenenfalls auf eine bestehende Klingelanlage zurückgegriffen werden kann, bei der lediglich das Netzgerät aus der gemeinsamen Rückleitung herauszunehmen und direkt an die Steuerung anzuschließen ist.

Nach einer bevorzugten Ausführungsform der Erfindung ist die Steuerung dazu ausgelegt, einen in einer der zweiten Leitungen fließenden Strom zu erfassen und bei Erfassung eines Rufstroms das Anlegen der ersten Spannung vorübergehend zu unterbrechen.

Dadurch wird allen Haustelefonen, mit Ausnahme des bzw. der gerufenen angezeigt, daß ein anderes Haustelefon gerufen worden ist.

Dabei kann weiter bevorzugt vorgesehen sein, daß die Haustelefone dazu ausgelegt sind, in einen Zustand der Mithörsperre zu schalten, wenn zwischen der ersten Leitung und ihrer jeweiligen zweiten Leitung keine Spannung anliegt.

Mit anderen Worten schaltet nicht die zentrale Steuerung die nicht gerufenen Haustelefone in den Zustand der Mithörsperre, sondern die Haustelefone sorgen selbst dafür.

Bei Türsprechsystemen ist es erforderlich, Informationen über den jeweiligen Betriebszustand der Haustelefone an die zentrale Steuerung zu übermitteln. Dazu gehört beispielsweise, ob eine Steuertaste an dem Haustelefon betätigt wird, ob der Hörer abgehoben oder aufgelegt ist usw.

Nach einem bevorzugten Ausführungsbeispiel der Erfindung sind die Haustelefone dazu ausgelegt, Informationen über ihren jeweiligen Betriebszustand im Wege der seriellen Datenübertragung an die Steuerung zu übermitteln.

Dabei können die Haustelefone dazu ausgelegt sein, die zu übermittelnden seriellen Daten in Frequenzbursts außerhalb des Sprachfrequenzübertragungsbereichs umzusetzen.

Damit besteht die Möglichkeit, auch Informationen über den jeweiligen Betriebszustand der Haustelefone über die der Sprachsignalübermittlung dienenden Leitungen an die Steuerung zu senden, so daß keine zusätzlichen Leitungen erforderlich sind.

Bevorzugt sind die Haustelefone dabei dazu ausgelegt, den seriellen Daten zusätzliche Informationen hinzuzufügen, die zur Erhöhung der Übertragungssicherheit dienen.

Dadurch kann beispielsweise sichergestellt werden, daß erkannt wird, wenn zwei Haustelefone gleichzeitig Sonderfunktionssignale senden, und es kann verhindert werden, daß beispielsweise das Betätigen einer an einem Haustelefon vorgesehenen Lichttaste zur Öffnung der Haupteingangstür führt.

Nach einer weiter bevorzugten Ausführungsform der Erfindung sind die Haustelefone dazu ausgelegt, in den Zustand der Mithörsperre zu schalten, wenn sie nicht innerhalb einer vorbestimmten Zeitspanne, nachdem sie gerufen worden sind, aktiviert werden.

Mit anderen Worten muß beispielsweise ein Hörer des Haustelefons innerhalb von 30 Sekunden nach Empfang eines Rufsignals abgehoben werden. Anderenfalls wird die Möglichkeit zur Aufnahme der Gesprächsverbindung mit der rufenden Stelle automatisch verhindert, indem sich das Haustelefon in den mithörgesperrten Zustand setzt (Mithörsperre).

Ferner kann erfindungsgemäß vorgesehen sein, daß die Haustelefone nicht auf einen Ruf reagieren, wenn sie aktiviert sind, und darüber hinaus ein von dem Ruf herrührendes Signal nicht durchschalten, weil sonst eine Schädigung des Gehörs zu befürchten sein könnte.

Dadurch kann ein Abhören der Wohnung von außen zuverlässig verhindert werden, und zwar auch dann, wenn (unbeabsichtigt) der Hörer nicht aufgelegt ist.

Die Haustelefone können erfindungsgemäß einen Hörer aufweisen und so ausgelegt sein, daß sie nur dann aktiviert sind, wenn der Hörer abgenommen ist.

Bei dieser Ausgestaltung besteht die Möglichkeit, durch Abnehmen des Hörers eine Rufabschaltung zu erreichen, wobei gegebenenfalls gleichzeitig ein Abhören der Wohnung zuverlässig verhindert ist.

Bevorzugt weisen dabei die Haustelefone eine Halterung zum Aufnehmen eines abgenommenen Hörers auf.

Zusätzlich zu, aber auch unabhängig von den vorstehend beschriebenen Merkmalen der Erfindung schafft die Erfindung weiter ein Türsprechsystem mit einer Türsprechanlage und n(n ≥ 1) Haustelefonen, bei dem die Türsprechanlage eine Freisprecheinrichtung aufweist und die Haustelefone einen Sprachsignaldetektor aufweisen der bei Erfassen eines Sprachsignals ein Spracherfassungssignal an die Türsprechanlage gibt und die Türsprechanlage für die Dauer des Empfangs des Spracherfassungssignals einen Lautsprecher ansteuert, wohingegen sie dann, wenn sie kein Spracherfassungssignal empfängt, ein Mikrophon ansteuert.

Mit anderen Worten ist die Steuerung für den Lautsprecher und das Mikrophon nicht in einem der beteiligten Geräte zusammengefaßt, sondern verteilt sich auf jeweils zwei der Geräte, nämlich auf das gerade aktive Haustelefon, in dem der Sprachsignaldetektor untergebracht ist, und auf die Türsprechanlage, die auf das von dem Sprachsignaldetektor abgegebene Signal durch entsprechende Ansteuerung von Lautsprecher oder Mikrophon reagiert.

Dadurch ist ausgeschlossen, daß akustische Störungen im Bereich der üblicherweise außen angebrachten Türsprechanlage zu Fehlschaltungen führen. Vielmehr kann die für die Ansteuerung von Mikrophon und Lautsprecher verantwortliche Steuerung in der Türsprechanlage sicher sein, daß alle Spracherfassungssignale von dem gerade angeschlossenen Haustelefon stammen.

Durch diese Ausgestaltung ist eine Selbsterregung an der Freisprechanlage, und damit ein "Rückkopplungspfeifen" ausgeschlossen. Ferner wird das Haustelefon von dem Zurückschalten der Sprachrichtung entlastet. Konflikte bei mehreren gleichzeitig aktiven Haustelefonen werden dadurch verhindert.

Bevorzugt hat das Spracherfassungssignal eine oberhalb des Sprachfrequenzübertragungsbereichs liegende Frequenz. Dadurch ist es nicht hörbar.

Darüber hinaus ist es besonders bevorzugt, daß das Integral des Spracherfassungssignals und das Integral dieses Integrals über eine Periode Null sind. Dadurch wird im Mittel ein Gleichspannungsoffset verhindert.

Bevorzugt hat eine Periode des Spracherfassungssignals vier Abschnitte, wobei es in einem ersten und einem dritten Abschnitt eine erste Polarität hat, in einem zweiten Abschnitt die der ersten Polarität entgegengesetzte Polarität hat und in einem vierten Abschnitt Null ist und wobei der erste und der dritte Abschnitt jeweils halb so lang wie der zweite Abschnitt sind. Diese Ausgestaltung des Signalmusters des Spracherfassungsignals führt auch dann zu einem Integral mit dem Wert Null, wenn Ungenauigkeiten und Trägheitseffekte die Signalerfassung bei der Abtastung des Signals negativ beeinflussen. Bei der gewählten Form des Signalmusters heben sich nämlich solche Effekte gerade auf.

Schließlich schafft die Erfindung einen Stromregler, insbesondere für die Energieversorgungseinrichtung eines Türsprechsystems der vorstehend beschriebenen Art, mit einer spannungsgesteuerten Stromquelle, an deren Eingangsanschluß die Differenz zwischen der Ausgangsspannung des Stromreglers und einer Referenzspannung anliegt, einem Integrator, an dessen Eingangsanschluß ein Ausgangssignal der Stromquelle anliegt, und einem einen Eingangsanschluß, einen Ausgangsanschluß und einen Steueranschluß aufweisenden elektronischen Schaltelement, wobei ein Ausgangssignal des Integrators an dem Steueranschluß des elektronischen Schaltelements und eine Versorgungsspannung an dem Eingangsanschluß des elektronischen Schaltelements anliegen und der Ausgangsanschluß des elektronischen Schaltelement auf den Eingangsanschluß der Stromquelle zurückgekoppelt ist.

Dieser Stromregler ist insbesondere vor dem folgenden Hintergrund erfunden worden:

Bei der Erzeugung der ersten Spannung müssen mehrere Gesichtspunkte berücksichtigt werden:

Die erste Spannung sollte auch bei geringer Belastung ihren Sollwert nur geringfügig überschreiten, um eine sichere Unterscheidung zu der als Rufspannung dienenden zweiten Spannung zu gewährleisten.

Sie sollte aber andererseits bei hoher Belastung (mehrere aktive Haustelefone) den Sollwert nicht wesentlich unterschreiten, um die Haustelefone in einem stabilen Arbeitsbereich betreiben zu können.

Ferner sollte ihr Innenwiderstand für Frequenzen oberhalb 300 Hz zur Übertragung des Sprachsignals möglichst hoch sein.

Die oben beschriebene erfindungsgemäße Stromregelung stellt eine geregelte Stromquelle dar, die die oben beschriebenen und scheinbar widersprüchlichen Forderungen erfüllt:

Eine Konstantstromquelle hat von sich aus eine hohe Impedanz.

Über die beschriebene Regelschleife gelingt es, den Innenwiderstand für das Sprachsignal nur unwesentlich zu beeinflussen und andererseits die Gleichspannung an dem Ausgangsanschluß konstant zu halten.

Dadurch wird an den Ausgangsanschlüssen immer genau soviel Strom fließen, daß im Mittel die gewünschte erste Spannung zwischen der ersten und den zweiten Leitungen anliegt. Dieser ersten Spannung wird das Wechselspannungssignal für die Sprache und gegebenenfalls ein Datensignal überlagert.

Insgesamt verhält sich der Stromregler wie eine Spule, deren Induktivität zum Zwecke des Ausregelns von abrupten Abweichungen des Ausgangssignals von dem Sollwert automatisch verringert wird. Da im Gegensatz zu einer Spule keine Energie gespeichert ist, die zunächst abgebaut werden muß, kann die Induktivität des Stromreglers sehr schnell umgeschaltet werden.

Erfindungsgemäß handelt es sich bei dem elektronischen Schaltelement bevorzugt um einen Transistor, weiter bevorzugt um einen MOSFET.

Der Integrator kann erfindungsgemäß einen Kondensator beinhalten, der zwischen den Ausgangsanschluß der Stromquelle einerseits und Masse oder einen Anschluß der Versorgungsspannung andererseits geschaltet ist.

Weiter bevorzugt sind ein Anschluß der Referenzspannung und der Ausgangsanschluß des Stromreglers über einen hochohmigen Widerstand miteinander verbunden.

Dieser Widerstand dient der Aufrechterhaltung des korrekten Regelverhaltens für den Fall, daß jegliche Last vollkommen abgeschaltet ist und daher keinerlei Strom mehr am Ausgangsanschluß abgezogen wird.

Der Stromregler beinhaltet erfindungsgemäß bevorzugt einen Kurzschlußdetektor, der dazu ausgelegt ist, das Ausgangssigal des Stromreglers zu erfassen und mit einem Sollwert zu vergleichen und dann, wenn das Ausgangssignal von dem Sollwert abweicht und die Abweichung länger als eine vorbestimmte Zeitspanne anhält, dem Steueranschluß des elektronischen Schaltelements ein einen konstanten Strom am Ausgangsanschluß des Stromreglers bewirkendes Steuersignal einzuprägen, der gering genug ist, auch im Kurzschlußfall keines der angeschlossenen Bauteile zu schädigen, und dann, wenn der Sollwert wieder erreicht ist, den Steueranschluß des elektronischen Schaltelements wieder für die Regelung im Normalbetrieb freizugeben.

Mit anderen Worten wird dann, wenn vom Sollwert abgewichen wird und die Abweichung über einen vorbestimmten Zeitraum nicht wieder ausgeregelt wird, davon ausgegangen, daß sich auf der Leitung ein Kurzschluß befindet. Daher wird die Regelung so verändert, daß nur noch ein minimaler konstanter Strom fließt. Wird bei diesem minimalen Strom wieder der Sollwert erreicht, so ist der Kurzschluß offensichtlich behoben, und die Regelung kann wieder in den Normalbetrieb zurückkehren. Mit anderen Worten ist ein aktiver Kurzschlußdetektor geschaffen.

Erfindungsgemäß bevorzugt ist eine erste Umschalteinrichtung vorgesehen, die dazu ausgelegt ist, den Steueranschluß des elektronischen Schaltelements mit Masse zu verbinden.

Dadurch wird der Ausgangsanschluß des Stromreglers an die Versorgungsspannung gelegt. Diese Möglichkeit kann ausgenutzt werden, um an einem angeschlossenen Haustelefon einen Ruf auszulösen.

Schließlich weist der Stromregler erfindungsgemäß bevorzugt eine zweite Umschalteinrichtung auf, die dazu ausgelegt ist, die Versorgungsspannung an den Steueranschluß des elektronischen Schaltelements anzulegen.

Mit dieser Schaltung besteht die Möglichkeit, den Stromregler abzuschalten und damit die ersten Spannung an der Ruhespannungsleitung abzuschalten, um den nicht gerufenen Haustelefonen anzuzeigen, daß sie in den Zustand der Mithörsperre schalten sollen.

Nachstehend ist die Erfindung anhand bevorzugter Ausführungsbeispiele unter Bezugnahme auf die beiliegende Zeichnung mit weiteren Einzelheiten näher erläutert. Dabei zeigen

Fig. 1    ein Prinzipschaltbild nach einem Ausführungsbeispiel des erfindungsgemäßen Türsprechsystems,

Fig. 2    eine Darstellung von Kombinationsmöglichkeiten etwaiger Einzelgeräte,

Fig. 3    schematisch das Muster eines Spracherfassungssignals, wie es zur Steuerung einer Freisprechanlage verwendet wird,

Fig. 4    das Prinzipschaltbild einer Stromregelung mit spannungsgesteuerter Stromquelle,

Fig. 5    das Prinzipschaltbild nach Fig. 4, jedoch mit weiteren Einzelheiten,

Fig. 6    ein Ausführungsbeispiel der in der Stromregelung verwendeten spannungsgesteuerten Stromquelle.

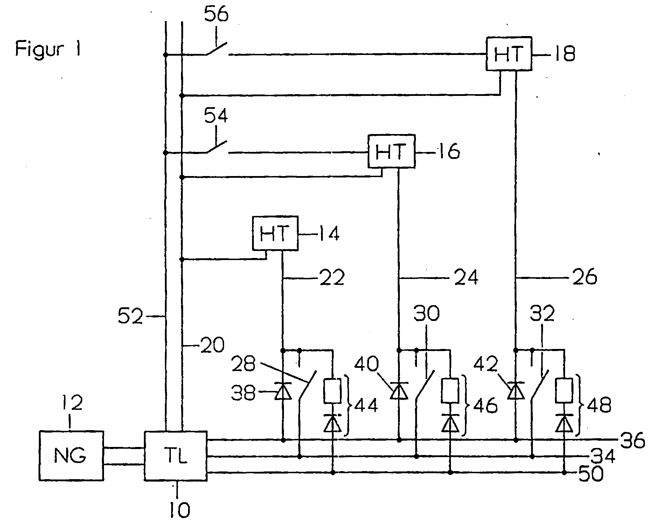

Das Prinzipschaltbild nach Fig. 1 zeigt eine Türsprechanlage 10 mit einem Netzgerät 12. Ferner zeigt sie drei Haustelefone 14, 16 und 18. Die Haustelefone sind alle über eine gemeinsame erste Leitung 20 mit der Türsprechanlage bzw. mit der darin befindlichen Spannungsversorgung verbunden. Die Spannungsversorgung legt eine Ruhespannung zwischen der ersten Leitung 20 und den zweiten Leitungen 22, 24, 26 an, über die jedes Haustelefon an einen Taster 28, 30, 32 angeschlossen ist. Über den Taster kann ein Rufsignal an das jeweiligen Haustelefon gegeben werden kann. Bei dem Rufsignal handelt es sich um eine zweite Spannung, die zwischen der ersten Leitung 20 und der aktivierten zweiten Leitung 22, 24, 26 angelegt wird.

Sobald einer der Taster 28, 30, 32 betätigt wird, wird der durch die Leitung 34 fließende Strom von einer Steuerung in der Türsprechanlage 10 erfaßt, woraufhin die Ruhespannung abgeschaltet wird. Ein Haustelefon 14, 16, 18, dem keine Ruhespannung mehr zugeführt wird, an dem aber andererseits auch keine Rufspannung anliegt, schaltet in den Betriebszustand der Mithörsperre, wodurch sichergestellt ist, daß kein Mithören stattfinden kann.

Über die Leitung 36 wird ein Sprachsignal an das jeweils gerade angeschlossene Haustelefon abgegeben. Die Dioden 38, 40, 42 dienen dazu, Fehlschaltungen bei der Betätigung der Ruftaste für ein anderes Haustelefon zu verhindern. Die Widerstands-Dioden-Kombinationen 44, 46, 48 dienen dazu, die Kathoden der Dioden 38, 40, 42 auf einem stabilen und oberhalb des Pegels der Leitung 36 liegenden Pegel zu halten. Der Pegel der Leitung 36 liegt bei 15 V, während die Kathode auf 18,5 V gehalten wird. Zu diesem Zweck liegt eine Spannung von 24 V auch an der Leitung 50 an.

Eine weitere Leitung 52 dient der Aussendung eines sog. Etagenrufs, wobei zu diesem Zweck der jeweilige Taster 54 bzw. 56 betätigt werden muß.

Wie bereits oben erläutert, wird zur Generierung eines Türrufs über eine der Ruftasten 28, 30, 32 eine deutlich höhere Gleichspannung als die Ruhespannung an das jeweilige Haustelefon angelegt. Es fließt dann für die Dauer des Tastendrucks ein Strom in der jeweiligen Rufleitung 22, 24, 26 und damit in der Leitung 34, der von der Steuerung in der Türsprechanlage detektiert werden kann. Die Türsprechanlage kann daher zumindest kurzzeitig die normale Ruhespannung abschalten und somit den nicht gerufenen Haustelefonen mitteilen, daß sie ihre Mithörsperre zu setzen haben. Das gerufene Haustelefon wird für die Dauer der Unterbrechung der Ruhespannung über die Rufspannung weiter versorgt.

Während die Signalübertragung von der Türsprechanlage zu den Haustelefonen - wie bereits ausgeführt - über unterschiedliche quasistationäre Pegel erfolgt, geschieht die Übermittlung von Informationen von einem Haustelefon zur Türsprechanlage im Wege der seriellen Datenübertragung. Zu übertragen ist dabei, daß an einem gerufenen Haustelefon ein Hörer abgehoben bzw. aufgelegt ist bzw. wurde, daß eine Steuertaste betätigt wurde, und welche etc.

Das jeweilige Informationstelegramm wird dabei in Frequenzbursts außerhalb des Sprachsignalübertragungsbereichs umgesetzt, um die zur Detektion in der Türsprechanlage notwendige Unterscheidung zum Sprachsignal technisch zu vereinfachen.

Aufgrund des schlechten Leitungsmaterials bei bereits vorhandenden Klingelanlagen, die erfindungsgemäß zu einem Türsprechsystem umfunktioniert worden sind, liegt die höchste sicher übertragbare Signalfrequenz im Bereich von etwa 20 bis 30 kHz. Damit sind Reichweiten von etwa 500 m möglich.

Da aber bei einer einfachen Realisierung des Datensenders nicht verhindert werden kann, daß zwei Haustelefone gleichzeitig Daten senden, andererseits jedoch das Betätigen beispielsweise der Lichttaste nicht zu einem Aktivieren des Türöffners führen sollte, ist eine gewisse Datensicherung erforderlich. Diese Datensicherung besteht u. a. darin, daß Codes mit einer Hamming-Distanz von 2 Bits gewählt sind und daß die Aussendung der Codes mehrfach wiederholt wird, wobei nur eine Mehrfach-Detektierung zur Ausführung der jeweiligen Funktion führt.

Die bereits oben angesprochene Mithörsperre ist so ausgelegt, daß ein Benutzer für 30 Sekunden nach dem Türruf die Möglichkeit hat, durch Abheben des Hörers das Gespräch anzunehmen (ein erneuter Türruf verlängert die Zeitspanne entsprechend). Danach ist die Mithörsperre gesetzt.

Bei diesem Ausführungsbeispiel der Erfindung ist verhindert, daß bei abgehobenem Hörer ein Ruf abgestrahlt werden kann.

Bei der obigen Definition der Mithörsperre kann mithin gleichzeitig verhindert werden, daß die Wohnung von außen abgehört werden kann.

Gleichzeitig läßt sich auf einfache Art und Weise eine Rufabschaltung implementieren: An dem Gehäuse des Haustelefons ist lediglich eine zweite Halterung vorzusehen, die den abgehobenen Hörer eines mithörgesperrten Telefons aufnehmen kann.

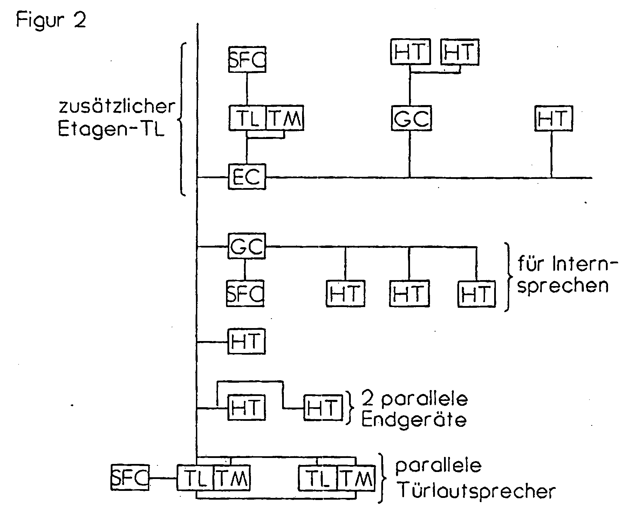

Fig. 2 zeigt verschiedene Kombinationsmöglichkeiten von Einzelgeräten. Dabei bedeuten die in Fig. 2 enthaltenen Bezeichnungen:

HT = Haustelefon
TL = Türsprechanlage
SFC = Modul für zusätzliche Steuerfunktionen
TM = Tastenmodul
GC = Gruppencontroler
EC = Etagencontroler

Der Fig. 2 ist zu entnehmen, wie "offen" das Gesamtsystem ist: Durch Wahl der geeigneten Einzelgeräte ist eine hohe Anpassungsfähigkeit des Gesamtsystems an das jeweilige Anwenderproblem zu erreichen, ohne daß das Prinzip der "(1 + n)-Verdrahtung" verlassen worden muß.

Wichtig für die Systematik und damit für die Flexibilität ist, daß sich mehrere parallele Türsprechanlagen, ein Etagencontroler bzw. ein Gruppencontroler in Richtung der jeweiligen Endgeräte immer so verhalten, daß diese meinen, sie seien an eine einzige Türsprechanlage angeschlossen, und daß andererseits parallele Haustelefone, ein Gruppencontroler bzw. ein Etagencontroler in Richtung auf die Türsprechanlage(n) das Verhalten eines Haustelefons zeigen.

Die Türsprechanlage beinhaltet eine Freisprecheinrichtung mit einem Mikrophon und einem Lautsprecher. Es ist bekannt, daß zur Unterdrückung der Pfeifneigung im Falle einer Zweidrahtverbindung eine Sprachregelung erforderlich ist. Eine solche Sprachregelung wird auch als "Sprachwippe" bezeichnet.

Bestehende Sprachregelungen sind so aufgebaut, daß sie sich in einem der beteiligten Geräte befinden. In dem vorstehend beschriebenen System bietet es sich nun an, die Steuerung der Sprachwippe auf die Türsprechanlage und die Haustelefone zu verteilen:

- Im Ruhezustand ist die Sprachrichtung von der Türsprechanlage zu dem gerade angeschlossenen Haustelefon geschaltet.

- Wird am Haustelefon gesprochen, so wird das dem Haustelefon eingegebene Sprachsignal erfaßt und das Haustelefon sendet ein dem Sprachsignal überlagertes Spracherkennungssignal auf der Sprachübertragungsleitung und die Türsprechanlage schaltet die Sprechrichtung um.

- Die Elektronik in der Türsprechanlage kann nun sicher sein, daß auch bei einer "schlechten" 2-/4-Drahtver-bindung alle Signale in ihrem Empfangszweig von einem Haustelefon stammen müssen, da das Signal von ihrem Mikrophon stark gedämpft ist. Das Fehlen eines Sprachsignals oder Spracherkennungssignals im Empfangszweig führt dann zur erneuten Umschaltung der Sprachrichtung. Der hierfür erforderliche Detektor ist analog zu demjenigen im Haustelefon aufgebaut.

- Das Endgerät sendet erst dann wieder einen erneuten Frequenzburst, wenn nach einer Sprechpause erneut ein Sprachsignal detektiert wird.

Durch dieses Vorgehen wird zweierlei erreicht:

- Die Selbsterregung einer Sprachsteuerung, die sich ausschließlich in der Türsprechanlage befindet, wird auch bei einer schlechten Anpassung (mehrere aktive Haustelefone) sicher verhindert.

- Das Haustelefon ist von dem Rückschalten der Sprachrichtung entlastet. Konflikte bei gleichzeitig aktiven Haustelefonen werden dadurch verhindert. Darüber hinaus wird das System "fehlertoleranter": Wird bei ungünstigen Verhältnissen einmal ein Frequenzburst von der Türsprechanlage "übersehen", so führt dies nicht zur Blockierung der Sprachühertragung.

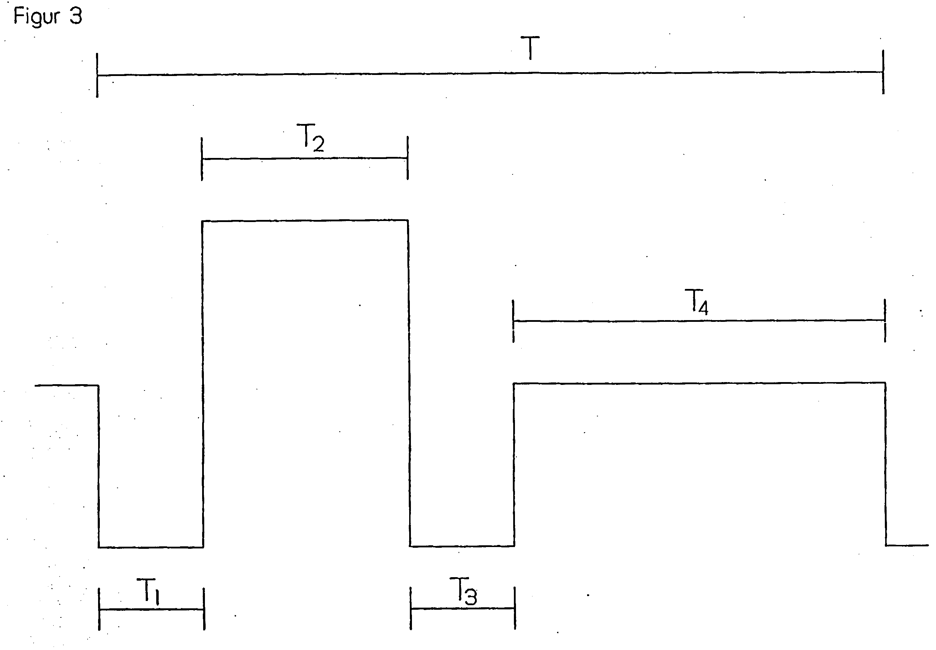

Fig. 3 zeigt ein Muster des Spracherkennungssignals. Das Signal darf nicht hörbar sein. Vor allem darf es keinen DC-Offset erzeugen, da dieser ein Knacken hervorrufen würde.

Da zwischen den Haustelefonen und der Türsprechanlage unterschiedlichste Netze auftreten können, ist hier besondere Vorsicht angebracht. Lange Leitungen haben in dem relevanten Frequenzbereich von 20 kHz bis 30 kHz integrierenden Charakter.

Das in Fig. 3 gezeigte "Wippensignal" hat eine Wiederholungsrate von 26 kHz (T = 38 $\mu$Sek.) und liegt damit außerhalb des Hörbereichs. Bei allen auftretenden Netzen ist der DC-Offset nicht hörbar.

Das Signal setzt sich aus vier Abschnitten (T1 bis T4) zusammen. Im ersten und im dritten Abschnitt ist das Signal negativ, im zweiten Abschnitt ist es positiv und im vierten Abschnitt hat es einen Pegel von Null. Der Amplitudenbetrag ist in den ersten drei Abschnitten jeweils gleich. Der erste und der dritte Abschnitt haben jeweils eine Länge von 5 $\mu$Sek., während der zweite Abschnitt doppelt so lang ist (10 $\mu$Sek.). Bei der gewählten Signalform sind sowohl das Integral als auch das Integral dieses Integrals Null. Sie führt auch dann nicht zu hörbaren Geräuschen (Knacken und dgl.), wenn Abtastfehler wegen Trägheiten und Ungenauigkeiten der Detektoren auftreten, weil die gewählte Signalform zu einem Ausgleich solcher Fehler führt.

In der Türsprechanlage sind ein Bandpaß und ein Detektor vorhanden, der über das Vorhandensein des "Wippensignals" entscheidet.

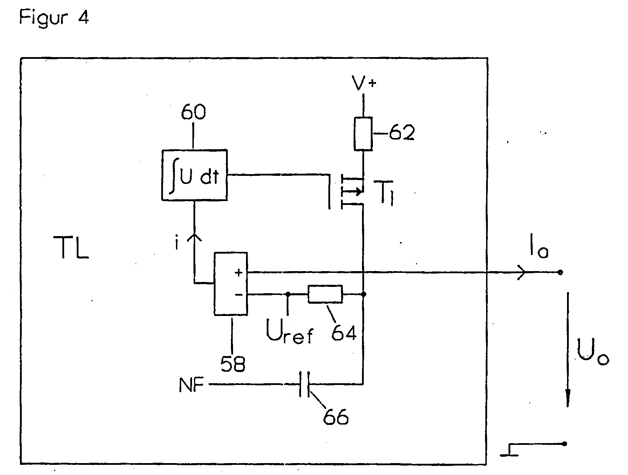

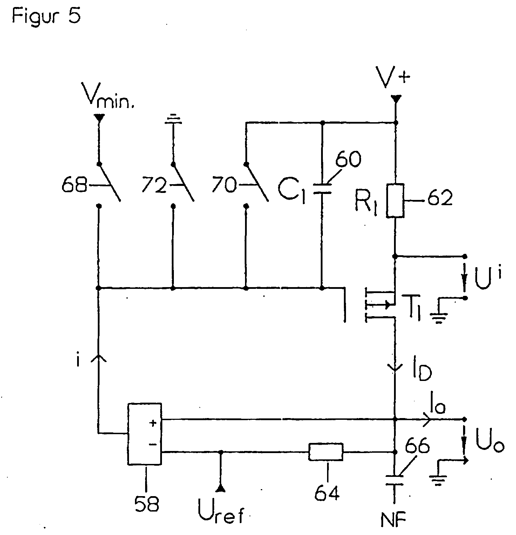

Fig. 4 zeigt die wesentlichen Bauteile eines Ausführungsbeispiels eines Stromreglers, wie er in einer Türsprechanlage nach einem Ausführungsbeispiel der Erfindung Verwendung finden kann. Fig. 5 zeigt weitere Details.

Kern der Stromregelung ist eine spannungsgesteuerte Stromquelle 58, deren Ausgangssignal an einen Integrator 60 geht, wobei der Integrator 60 sein Ausgangssignal an den Gate-Anschluß eines Transistors $T_1$ gibt. An dem Source-Anschluß des Transistors $T_1$ liegt eine versorgungsspannung von beispielsweise 24 V, unter Zwischenschaltung eines Widerstands 62. An die Stromquelle 58 geht auch eine Referenzspannung $U_{ref}$, wobei diese Referenzspannung auch über einen Widerstand 64 an einen Ausgangsanschluß des Stromreglers gegeben wird, an dem die Ausgangsspannung $U_0$ anliegt.

Das Sprachsignal NF wird über einen Kondensator 66 eingespeist.

Nachfolgend sind technische Details der Stromregelung anhand des detaillierteren Schaltbildes nach Fig. 5 erläutert:

Das Prinzip der Gegenkopplung

- sei $U_0 = U_{Ref}$
  $\Rightarrow i = 0 \Rightarrow U_C = const \Rightarrow I_D = const \Rightarrow I_a = const \Rightarrow U_0 = const$
- sei $U_0 > U_{Ref}$
  $\Rightarrow i > 0 \Rightarrow U_C\downarrow \Rightarrow I_D\downarrow \Rightarrow I_a\downarrow \Rightarrow U_0\downarrow$

Da über den Transistor kein Strom "abgesaugt" werden kann, wird die Spannung $U_0$ nur durch eine angeschlossene Last erniedrigt.

Für den Fall, daß kein Ausgangsstrom mehr "verbraucht" wird, ist der Widerstand 64 gegen $U_{Ref}$ geschaltet (bei Erreichen der Sollspannung - U0 = 15 V - soll durch ihn nicht unnötigerweise Strom fließen).

Er sorgt dafür, daß bei zu hoher Ausgangsspannung (Strom an hochohmiger Last / aufgeladene Leitungskapazitäten) "überschüssiger" Strom "verbraucht" werden kann. Für das Sprachsignal bedeutet er zwar eine zusätzliche, zu den verbundenen Teilnehmern parallelgeschaltete Last - die hierdurch in Kauf zu nehmende Dämpfung bzw. verschlechterte Anpassung kann jedoch in ihrem Ausmaß toleriert werden.

- sei $U_0 < U_{Ref}$
  $\Rightarrow i < 0 \Rightarrow U_C\uparrow \Rightarrow I_D\uparrow \Rightarrow I_a\uparrow \Rightarrow U_0\uparrow$

Der Strom wird soweit erhöht, daß trotz zusätzlicher Last wieder die 15 V erreicht werden.

Die Kleinsignalsteuerung

$$U_0 = U_{0A} + \hat{u}\,\sin(\omega t)$$

Annahmen:

- Der eingeschwungene Zustand sei erreicht: $U_0 = 15\ V$

- $R_1 > 1/g_m$, die Steilheit des Transistors im Arbeitspunkt

- 

$$|U_{DS}| > 2 * I_D * R_{DS\,on\,max}, \text{ also } I_D < \frac{4,5\ V}{R_{DS\,on\,max}}$$

- Der betrachtete Frequenzbereich sei so niedrig, daß parasitäre Kapazitäten des Regelkreises vernachlässigbar sind (NF-Anwendung)

- zunächst werde der offene Regelkreis betrachtet. Dies bedeutet hier, daß die den eingeschwungenen Zustand "störende" Signalquelle so niederohmig ist, daß eine Änderung des Ausgangsstromes keine Rückwirkung auf $U_0$ hat!

$\hat{u}'$ ergibt sich bei den getroffenen Annahmen aus der Übertragungsfunktion eines Transistors in Drain-Grundschaltung:

$$\hat{u}' = \frac{g_m R_1}{g_m R_1 + 1} * \hat{u}_a, \text{ und somit } \hat{i}_v = \frac{g_m}{g_m R_1 + 1} * \hat{u}_a$$

andererseits gilt:

$$\hat{i}_a = 4,9\ \frac{\mu A}{V} * \hat{u}_0 \text{ und somit}$$

$$\hat{u}_a = 4{,}9 \, \frac{\mu A}{V} \, * \, \frac{1}{j\omega C_1} \, * \, \hat{u}_v, \text{ also}$$

$$\hat{i}_v = \frac{g_m}{g_m R_1 + 1} \, * \, 4{,}9 \, \frac{\mu A}{V} \, * \, \frac{1}{j\omega C_1} \, * \, \hat{u}_v = \frac{1}{j\omega \dfrac{C_1(R_1 + g_m)}{4{,}9 \, \mu A/V}} \, * \, \hat{u}_v$$

von einer Spule wiederum ist bekannt, daß

$$i_L = \frac{u_L}{j\omega L} :$$

es korrespondiert also:

$$L = \frac{c_1 \, (R_1 + 1/g_m)}{4{,}9 \, \mu A/V}$$

Festzuhalten ist, daß L abhängig vom Arbeitspunkt des Transistors ist. Der Einfluß ist umso größer, je kleiner $R_1$ gewählt wird.

Mit $R_1$ wird letztlich die minimale Induktivität eingestellt.

## Die Großsignalaussteuerung

Die mathematische Beschreibung ist nicht mehr trivial, da

- sich Nichtlinearitäten aus der Kennlinie des Transistors ergeben:

- die Bedingung $|U_{DS}| > 2 \, * \, I_D \, * \, R_{DS \, on \, max}$ nicht zwangsweise erfüllt ist.

Qualitativ bleibt - meßtechnisch nachvollzogen - das Verhalten jedoch gleich. Lediglich der Verlauf der Einschwingkurve bei einem abrupten, großen Lastwechsel zeigt eine gewisse zeitliche Verzerrung. Dies ist in dieser Anwendung jedoch nicht relevant, da

- das Sprachsignal auf 1 $V_{eff}$ begrenzt ist.

- und Amplituden von Frequenzkomponenten > 100 Hz, die verzerrungsfrei übertragen werden sollen, durch den Kondensator am Gate "wegintegriert" werden, so daß sie keinen Beitrag zum Klirrfaktor leisten.

- zudem bei den Endgeräten darauf geachtet wurde, daß diese keine abrupten Stromwechsel vollziehen, wenn anderen Teilnehmer aktiv sind.

- nach einem Türruf voraussetzungsgemäß (Systemdefinition der Anwendung) kein Endgerät seine Sprachübertragung eingeschaltet hat. In diesem Zustand ist die exakte Kurvenform unerheblich. Lediglich auf die Amplitude des Überschwingens ist zu achten.

Zusammenfassend läßt sich sagen, daß sich für die Sprachsignalübertragung der Stromregler letztlich wie eine Induktivität von 1,8 H verhält.

## Das Umschalten der Induktivität

Beim Einschalten des Systems, nach jedem Türruf oder bei der Installation/Fehlersuche ist die große Induktivität eigentlich unerwünscht:

Es wird zu diesem Zeitpunkt kein Sprachsignal übertragen. Gleichzeitig können in diesen Situationen jedoch große Lastwechsel stattfinden, die schnell ausgeregelt werden müssen.

Weicht daher die Ist-Spannung um mehr als ±3 V vom Sollwert ab (2 zusätzliche Komparatoren von 12 bzw. 18 V), so wird der Referenzstrom, der letztlich den Proportionalitätsfaktor (nominell 4,9 μA/V) bestimmt, um den Faktor 100 erhöht. Die effektive Induktivität wird daher um eben den Faktor 100 reduziert.

Dies geschieht unmittelbar; am externen Kondensator ergibt sich kein Spannungssprung; dieser wird lediglich von diesem Zeitpunkt ab mit dem 100fachen Strom umgeladen. Parasitäre Kapazitäten in den Stromspiegeln können im interessierenden Frequenzbereich vernachlässigt werden.

Diese Beschleunigung wird solange beibehalten, bis die Ist-Spannung wieder innerhalb der 3 V-Marge liegt.

Die hierzu erforderliche Steuerspannung am Gate des Transistors $T_1$ wird durch diese "Beschleunigung" jedoch so schnell erreicht, daß die 18 V nur unwesentlich überschritten (bzw. die 12 V unterschritten) werden - dies auch nur für einen sehr kurzen Zeitraum. Die genauen Werte sind abhängig von der Größe des Lastwechsels.

### Der Kurzschlußdetektor

Liegt die Ist-Spannung nicht innerhalb einer gewissen Zeit (z. B. 100 ms) wieder über dem Schwellwert von 15 V - 3 V = 12 V, so kann dies als Überlastfall bzw. Kurzschluß interpretiert werden.

In diesem Fall kann das Gate des Transistors $T_1$ mit dem Schalter 68 auf ein konstantes Potential gelegt werden:

$$U_{Gate} = 24 \text{ V} * U_{Threshold} - I_K * R_1.$$

Mit $U_{Threshold} = 1,5$ V, $R_1 = 33\ \Omega$ und $U_{Gate} = 22,3$ V ergibt sicht ein ungefährer Strom im Kurzschlußfall von etwa 5 mA.

Wird mit diesen "nur" 5 mA wieder der Schwellwert von 15 V - 3 V = 13 V erreicht (alle Endgeräte schalten sich bei fehlender Versorgung ab), so ist der Kurzschluß bzw. die Überlast behoben und der Regelkreis kann seinen Normalbetrieb wieder aufnehmen.

### Die Ruferzeugung

Bei geringeren Anforderungen an die Induktivität kann die Stromregulierung auch zur Erzeugung eines Rufes (Ausgangsspannung 24 V) verwendet werden: für den erhöhten Strombedarf (300 mA bei 2 parallelen Haustelefonen) muß der Widerstand 62 verringert werden, und ein anderer (keinerer $R_{DSon}$) Transistor verwendet werden.

Durch diese Maßnahmen steigt allerdings die Abhängigkeit der Induktivität von der Transistorkennlinie (s. o.).

Dies kann und wird beim sog. Gruppencontroller (GC) ausgenutzt: dort kommen keine Tastenmodule zum Einsatz, sondern der Ruf (24 V an die Endgeräte) wird direkt von dem Stromregler generiert.

Hierzu wird lediglich die bereits angesprochene $U_{Ref}$ auf 24 V gelegt.

In Folge wird dann automatisch die Induktivität auf klein gestellt und der Regeltransistor bei Schließen eines Schalters 72 voll durchgesteuert, bis die maximal mögliche Sapnnung als $U_0$ ausgegeben wird.

### Die Mithörsperre

Wird das Gate des Transistors $T_1$ über einen Schalter 70 an die Versorgungsspannung V+ (24 V) angeschlossen, so wird der Stromregler vollkommen abgeschaltet und die Ausgangsspannung bricht zusammen, falls noch ein Gerät aktiv sein sollte, weil es somit Strom zieht. Diese Spannungsunterbrechung kann am Haustelefon detektiert werden, woraufhin das Endgerät seine Mithörsperre setzt und eine etwaig bestehende Gesprächsverbindung abschaltet.

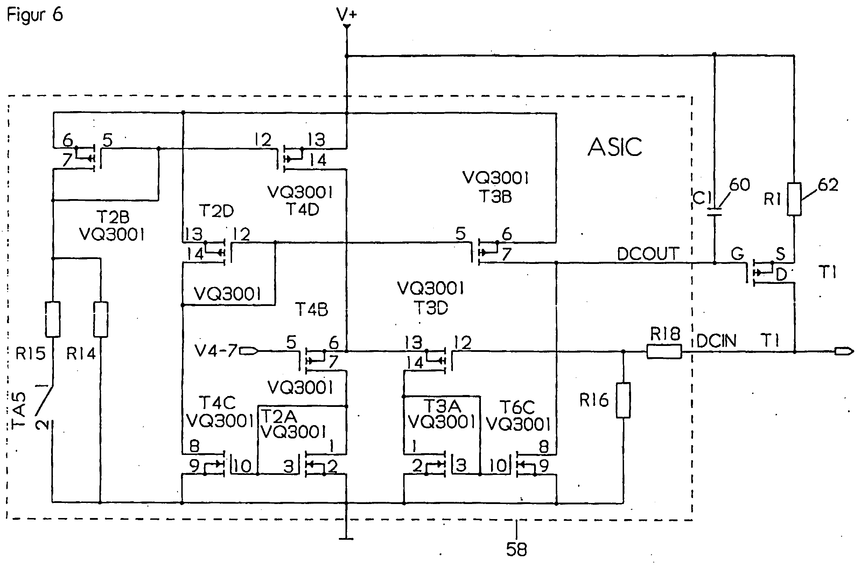

Unter Bezugnahme auf Fig. 6 ist nachstehend ein Ausführungsbeispiel für die spannungsgesteuerte Stromguelle beschrieben.

Über einen Schalter TA5 kann ein Referenzstrom umgeschaltet werden: Dabei bedeutet hoher Strom geringe Induktivität, und umgekehrt.

Über den Stromspiegel T2B-T4D wird dieser Strom der Eingangsstufe eingeprägt.

Die Eingangsstufe T4B-T3D teilt diesen Strom entsprechend der Differenz zwischen Referenzspannung (4,7 V) und der über den Spannungsteiler heruntergeteilten Eingangsspannung (15 V) in die beiden Stränge über T2A und T3A auf. Bei gleichen Spannungen sind die Ströme gleich. Ist die heruntergeteilte Eingangsspannung großer als 4,7 V, so fließt mehr Strom zu dem Transistor T2A.

Der Strom durch T2A fließt über zwei Stromspiegel auch aus Drain-Anschluß des Transistors T3B.

Über den Stromspiegel T3A-T6C wird ein dem Strom durch T3A entsprechender Strom vom Drain-Anschluß des Transistors T3B abgesaugt.

Somit wird der Kondensator C1 über einen definierten Strom ge- bzw. entladen. Dieser Strom ist proportional zur aktuellen Differenz zwischen Soll- und Ist-Spannung. Die Proportionalitätskonstante ist über die Größe des Referenzstromes einstellbar.

Je höher die Frequenz an dem Pin DCin ist, desto geringer ist die Spannungsänderung über den Kondensator und damit auch der hierdurch eingestellte Strom durch den Transistor $T_1$.

Die jeweils zusammengehörigen Transistoren (Eingangsstufe, Stromspiegel) müssen ein entsprechendes Matching aufweisen. Dies ist jedoch auch bei einem diskreten Aufbau kein Problem, weil entsprechende ICs mit je zwei Transistoren erhältlich sind. Noch geringer ist das Problem wenn - wie in Fig. 6 gezeigt - ein ASIC verwendet wird. Der gesamte Block entspricht in seiner Größe nicht einmal einem Operationsverstärker.

Die in Fig. 5 dargestellten Schalter und Hilfsspannungen sowie Komparatoren zum Erfassen von Spannungsunterschieden sind in Fig. 6 nicht dargestellt.

Der Stromregler nach Fig. 6 zeigt in der Praxis auch bei unterschiedlichsten Netzabschlüssen hervorragende Stabilitätseigenschaften: Mit der realisierten Proportionalitätskonstanten 4,9 µA/V, $C_1$ = 220 nF, $R_1$ = 33 Ω, V+ = 24 V und einen Transistor BSP92 ergibt sich eine Induktivität L = 1,8 H und ein Innenwiderstand Ri < 1 Ω (Regelspannung 15 V).

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1.  Türsprechsystem mit einer Türsprechanlage (10), n (n ≥ 1) Haustelefonen (14, 16, 18) und einer eine Energieversorgungseinrichtung (12) und eine Rufeinrichtung (28, 30, 32) zum Rufen einzelner oder einer Gruppe von Haustelefonen (14, 16, 18) enthaltenden Steuerung,

    gekennzeichnet durch

    eine erste Leitung (20), an die alle Haustelefone (14, 16, 18) angeschlossen sind, und m (m ≥ 1) zweite Leitungen (22, 24, 26), an die jeweils ein einzelnes Haustelefon (14, 16, 18) oder eine Gruppe Haustelefone angeschlossen ist,

    wobei die Steuerung dazu ausgelegt ist, in einem Ruhezustand eine erste Spannung zwischen der ersten Leitung (20) einerseits und den zweiten Leitungen (22, 24, 26) andererseits anzulegen und bei Betätigen der Rufeinrichtung (28, 30, 32) eine zweite Spannung zwischen der ersten Leitung (20) und derjenigen zweiten Leitung (22, 24, 26) anzulegen, die dem gerufenen Haustelefon (14, 16, 18) bzw. der gerufenen Gruppe Haustelefone zugeordnet ist, um dort ein Rufsignal zu erzeugen.

2.  Türsprechsystem nach Anspruch 1, dadurch gekennzeichnet, daß die Steuerung dazu ausgelegt ist, einen in einer der zweiten Leitungen (22, 24, 26) fließenden Strom zu erfassen und bei Erfassung eines Rufstroms das Anlegen der ersten Spannung vorübergehend zu unterbrechen.

3.  Türsprechsystem nach Anspruch 2, dadurch gekennzeichnet, daß die Haustelefone (14, 16, 18) dazu ausgelegt sind, in einen Zustand der Mithörsperre zu schalten, wenn zwischen der ersten Leitung (20) und ihrer jeweiligen zweiten Leitung (22, 24, 26) keine Spannung anliegt.

4.  Türsprechsystem, insbesondere nach einem der vorangehenden Ansprüche, dadurch gekennzeichnet, daß die Haustelefone (14, 16, 18) dazu ausgelegt sind, Informationen über ihren jeweiligen Betriebszustand im Wege der seriellen Datenübertragung an die Steuerung zu übermitteln.

5.  Türsprechsystem nach Anspruch 4, dadurch gekennzeichnet, daß die Haustelefone (14, 16, 18) dazu ausgelegt sind, die zu übermittelnden seriellen Daten in Frequenzbursts außerhalb des Sprachfrequenzübertragungsbereichs umzusetzen.

6.  Türsprechsystem nach Anspruch 4 oder 5, dadurch gekennzeichnet, daß die Haustelefone (14, 16, 18) dazu ausgelegt sind, den seriellen Daten zusätzliche Informationen hinzuzufügen, die zur Erhöhung der Übertragungssicherheit dienen.

7.  Türsprechsystem nach einem der vorangehenden Ansprüche, dadurch gekennzeichnet, daß die Haustelefone (14, 16, 18) dazu ausgelegt sind, in den Zustand der Mithörsperre zu schalten, wenn sie nicht innerhalb einer vorbestimmten Zeitspanne, nachdem sie gerufen worden sind, aktiviert werden.

8.  Türsprechsystem nach Anspruch 7, dadurch gekennzeichnet, daß die Haustelefone (14, 16, 18) dazu ausgelegt sind, nicht auf einen Ruf zu reagieren und ein von einem Ruf herrührendes Signal nicht durchschalten, wenn sie aktiviert sind.

**9.** Türsprechsystem nach Anspruch 7 oder 8, dadurch gekennzeichnet, daß die Haustelefone (14, 16, 18) einen Hörer aufweisen und dann aktiviert sind, wenn der Hörer abgenommen ist.

**10.** Türsprechsystem nach Anspruch 9, dadurch gekennzeichnet, daß die Haustelefone (14, 16, 18) eine Halterung zum Aufnehmen eines abgenommenen Hörers aufweisen.

**11.** Türsprechsystem mit einer Türsprechanlage (10) und n (n $\geq$ 1) Haustelefonen (14, 16, 18), insbesondere nach einem der vorangehenden Ansprüche, dadurch gekennzeichnet, daß die Türsprechanlage (10) eine Feisprecheinrichtung aufweist und die Haustelefone (14, 16, 18) einen Sprachsignaldetektor aufweisen, der bei Erfassen eines Sprachsignals ein Spracherfassungssignal an die Türsprechanlage (10) gibt und die Türsprechanlage (10) für die Dauer des Empfangs des Spracherfassungssignals einen Lautsprecher ansteuert, wohingegen sie dann, wenn sie kein Spracherfassungssignal empfängt, ein Mikrofon ansteuert.

**12.** Türsprechsystem nach Anspruch 11, dadurch gekennzeichnet, daß das Spracherfassungssignal eine oberhalb des Sprachfrequenzübertragungsbereichs liegende Frequenz hat.

**13.** Türsprechsystem nach Anspruch 11 oder 12, dadurch gekennzeichnet, daß das Integral des Spracherfassungssignals und das Integral dieses Integrals über eine Periode null sind.

**14.** Türsprechsystem nach Anspruch 13, dadurch gekennzeichnet, daß eine Periode des Spracherfassungssignals vier Abschnitte hat, wobei es in einem ersten und einem dritten Abschnitt eine erste Polarität hat, in einem zweiten Abschnitt die der ersten Polarität entgegengesetzte Polarität hat und in einem vierter, Abschnitt null ist und wobei der erste und der dritte Abschnitt jeweils halb so lang wie der zweite Abschnitt sind.

**15.** Stromregler, insbesondere für die Energieversorgungseinrichtung eines Türsprechsystems nach einem der vorangehenden Ansprüche, mit einer spannungsgesteuerten Stromquelle (58), an deren Eingangsanschluß die Differenz zwischen der Ausgangsspannung. ($U_0$) des Stromreglers und einer Referenzspannung ($U_{ref}$) anliegt, einem Integrator (60), an dessen Eingangsanschluß ein Ausgangssignal der Stromquelle (58) anliegt und einem einen Eingangsanschluß, einen Ausgangsanschluß und einen Steueranschluß aufweisenden elektronischen Schaltelement ($T_1$), wobei ein Ausgangssignal des Integrators (60) an dem Steueranschluß des elektronischen Schaltelements ($T_1$) und eine Versorgungsspannung (V+) an dem Eingangsanschluß des elektrischen Schaltelements ($T_1$) anliegen und der. Ausgangsanschluß des elektronischen Schaltelements ($T_1$) auf den Eingangsanschluß der Stromquelle (58) zurückgekoppelt ist.

**16.** Stromregler nach Anspruch 15, dadurch gekennzeichnet, daß das elektronische Schaltelement ($T_1$) ein Transistor ist.

**17.** Stromregler nach Anspruch 16, dadurch gekennzeichnet, daß der Transistor ein MOSFET ist.

**18.** Stromregler nach einem der Ansprüche 15 bis 17, dadurch gekennzeichnet, daß der Integrator (60) einen Kondensator beinhaltet, der zwischen den Ausgangsanschluß der Stromquelle (58) einerseits und Masse oder einen Anschluß der Versorgungsspannung (V+) andererseits geschaltet ist.

**19.** Stromregler nach einem der Ansprüche 15 bis 18, dadurch gekennzeichnet, daß ein Anschluß der Referenzspannung ($U_{ref}$) und der Ausgangsanschluß des Stromreglers über einen hochohmigen Widerstand (64) miteinander verbunden sind.

**20.** Stromregler nach einem der Ansprüche 15 bis 19, gekennzeichnet durch einen Kurzschlußdetektor, der dazu ausgelegt ist, das Ausgangssignal ($U_0$) des Stromreglers zu erfassen und mit einem Sollwert zu vergleichen und

dann, wenn das Ausgangssignal ($U_0$) von dem Sollwert abweicht und die Abweichung länger als eine vorbestimmte Zeitspanne anhält, dem Steueranschluß des elektronischen Schaltelements ($T_1$) ein einen konstanten Strom am Ausgangsanschluß des Stromreglers bewirkendes Steuersignal einzuprägen, der gering genug ist, auch im Kurzschlußfall keines der angeschlossenen Bauteile zu schädigen, und
dann, wenn der Sollwert wieder erreicht ist, den Steueranschluß des elektronischen Schaltelements wieder für die Regelung im Normalbetrieb freizugeben.

**21.** Stromregler nach einem der Ansprüche 15 bis 20, gekennzeichnet durch eine erste Umschalteinrichtung (72), die

EP 0 847 182 A2

dazu ausgelegt ist, den Steueranschluß des elektronischen Schaltelements ($T_1$) mit Masse zu verbinden.

22. Stromregler nach einem der Ansprüche 15 bis 21, gekennzeichnet durch eine zweite Umschalteinrichtung (70), die dazu ausgelegt ist, die Versorgungsspannung (V+) an den Steueranschluß des elektronischen Schaltelements ($T_1$) anzulegen.

12

Figur 1

Figur 2

zusätzlicher
Etagen-TL

für Internsprechen

2 parallele
Endgeräte

parallele
Türlautsprecher

Figur 3

$T$

$T_1$ $T_2$ $T_3$ $T_4$

Figur 4

Figur 5

Figur 6

EP 0 847 182 A2